# EUROPEAN PATENT SPECIFICATION

(11) **EP 0 462 293 B1**
(45) Date of publication and mention of the grant of the patent: **11.09.1996**
(21) Application number: 91901905.9
(22) Date of filing: 09.01.1991
(51) Int. Cl.: F16L 33/207

(54) **METALLIC HOSE JOINT**
METALLISCHER ANSCHLUSSSTUTZEN FÜR SCHLÄUCHE
RACCORD METALLIQUE POUR TUYAUX SOUPLES

(30) Priority: 11.01.1990 JP 1503/90 U; 11.01.1990 JP 1504/90 U; 06.06.1990 JP 60025/90 U
(43) Date of publication of application: 27.12.1991
(73) Proprietor: MITSUBISHI JIDOSHA KOGYO KABUSHIKI KAISHA, Tokyo 108 (JP); Kabushiki Kaisha Meiji Gomu Kasei, Shinjuku-ku Tokyo (JP)
(72) Inventor: KOZUKA, Hajime, c/o Mitsubishi Jidosha Kogyo K.K., Tokyo 108 (JP); FURUYA, Youichi, c/o Kanagawa Factory, Ashigarakami-gun, Kanagawa-ken 258 (JP); YODA, Takahiro, c/o Kanagawa Factory, Ashigarakami-gun, Kanagawa-ken 258 (JP); KITAMURA, Kazuo, c/o Kanagawa Factory, Ashigarakami-gun, Kanagawa-ken 258 (JP); IJIMA, Terutsugu, c/o Kanagawa Factory, Ashigarakami-gun, Kanagawa-ken 258 (JP)
(74) Representative: Godwin, Edgar James
(86) International application number: JP9100005
(87) International publication number: WO9110860

(56) References cited:
- DE-A- 2 423 347
- FR-A- 2 191 058
- FR-A- 2 443 014
- JP-A-61 175 393
- JP-Y- 6 337 591
- US-A- 3 245 699
- US-A- 3 530 900

## Description

### FIELD OF THE INVENTION

The present invention relates to a metallic hose joint, and more particularly to a metallic joint comprising a nipple and a sleeve for caulking a hose made of a heat resistant material that can withstand high temperature fluids.

The present invention is applicable to hoses made of rubber or resin such as power steering hose, oil brake hose, hydraulic suspension hose, oil hose, fuel hose, high pressure hydraulic hose, and super-high pressure hose for water jet.

### BACKGROUND OF THE INVENTION

It is known in the art to use metallic hose joints that can be fixed on hoses made of rubber or resin for connecting the hoses to different equipments. Hose joints of this type and particularly those for high pressure fluids should not leak during use at the portion where the joint and the hose are tightly connected. The hose joint must therefore have a high and continuous sealing performance to prevent fluid leakage.

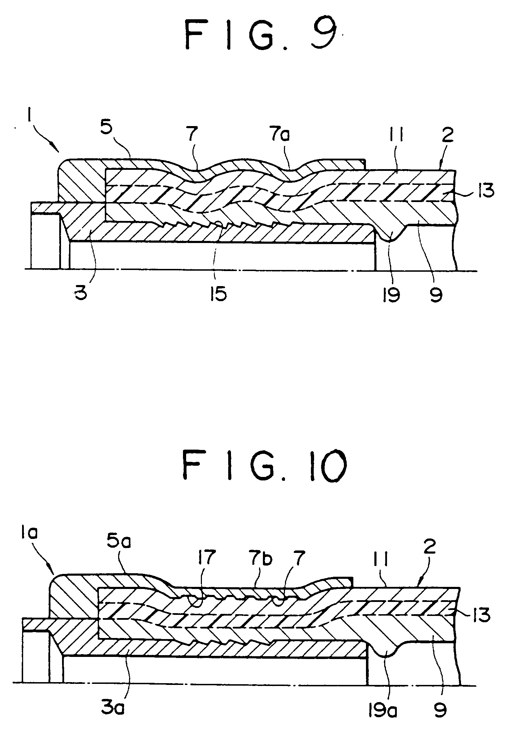

Figs. 9 and 10 show examples of the prior art metallic hose joint.

The metallic hose joint 1 shown in Fig. 9 comprises a nipple 3 to be inserted into a rubber hose 2 and a sleeve 5 which is formed concentrically with said nipple 3, and is tightly engaged with the rubber hose 2 by means of annular caulking members 7, 7a that are formed by pressing the sleeve 5 in the radial direction.

The shown rubber hose 2 is provided with a reinforcement layer 13 between its inside rubber wall 9 and outside rubber wall 11 made of heat resistant rubber. The inside rubber wall 9 is made of soft rubber such as nitrile and neoprene rubber. The reinforcement layer 13 comprises braid, thread wound in spiral, or wire and the like. The outer periphery of the nipple 3 has circumferential serrations 15 to prevent slipping off of the hose.

The rubber hose 2 is inserted in the gap between the nipple 3 and the sleeve 5 of the above construction, and the caulking members 7 and 7a provided at two locations on the sleeve 5 are utilized to fixedly engage the rubber hose 2 with the joint 1 by so-called two-stage caulking structure.

Fig. 10 shows another example of the prior art hose joint which differs from the first example in the inner shape of the sleeve and in the caulking method.

The metallic hose joint 1a comprises a nipple 3a and a sleeve 5a. The nipple 3a is identical in shape with the nipple 3, but the sleeve 5a is provided on its inside face with an annular groove 17 extending in the circumferential direction. The sleeve is indented radially to form a so-called flat caulking member 7b.

To prevent fluid leakage via the faces where the nipple 3 or 3a and the sleeve 5 or 5a come in contact with the inner and outer walls of the prior art hose 2, tightening force exerted by the nipple 3, 3a and the sleeve 5, 5a may be increased. However, when the tightening force is increased too much, the inner wall 9 of the rubber hose may be broken by the serrations 15. Even if pressed, a portion of the rubber volume would shift to where the pressure is not acting, as the rubber is elastic and forms an annular bulge 19 or 19a along the entire circumference at the tip of the nipple 3, 3a (the end face in the direction of hose insertion). As the bulge 19 or 19a is subjected to substantial deformation, this portion would easily become deteriorated by repeated compressions, causing cracks over a short period of time.

Further, when the bulge 19 or 19a is formed, the tightening force would decrease for the volume of the rubber being shifted, failing to achieve the desired tightening.

As the temperature of the rubber hose rises when the equipment to which it is attached is in use, stress on the rubber between the nipple 3, 3a and the sleeve 5, 5a would increase due to thermal expansion. In other words, the stress of the rubber increases as the rubber temperature rises, and the sealing performance would temporarily improve. However, the rubber temperature drops with time after the operation of the equipment is suspended, causing gradual stress relaxation. As the time elapses, the stress relaxation accelerates. The rubber stress is thus decreased by being repeatedly subjected to temperature rise and drop, and the rubber hose would eventually lose its sealing property against the fluid.

JP-A-61-175393 discloses a hose joint for rubber hoses, comprising a nipple and a compressible sleeve which is caulked onto the hose end with at least one inwardly projecting caulking member or region. The nipple has one or more grooves into which the rubber hose is pressed, with the object of filling the groove and reducing leakage. This document refers also to JP-A-55-39910 and discusses the problems encountered in ensuring that the rubber hose fills grooves provided on the nipple, and consequent loss of sealing performance.

The first object of the present invention is to provide a metallic hose joint for hoses by improving the nipple to prevent bulging of the hose and to thereby prevent stress relaxation.

The second object of the present invention is to provide a metallic hose joint for hoses which maintains high sealing performance over an extended use.

The invention resides in a hose joint with the features of claim 1.

GB 1467066 discloses a hose joint in accordance with the preamble of claim 1, with a groove axially displaced from a position directly below a caulking member. However in this case the groove is provided solely for the purpose of transmitting pressure from the interior of the sleeve through a vent to the internal surface of the hose.

The present invention comprises a nipple to be inserted inside a hose and a sleeve formed concentrically with said nipple. An annular groove is formed on the outer periphery of the nipple to receive the expanded portion of the rubber toward the tip end of the nipple when the sleeve is caulked and to prevent the rubber from bulging at the tip end of the nipple.

The annular groove is so configured that it can receive a portion of the inner rubber wall of hose when the hose is inserted between the nipple and the sleeve and the latter is caulked. The annular groove has a size sufficient to receive the bulging inner rubber wall with an allowance, forming a gap at the bottom. It should be noted that the configuration of the annular groove is suitably determined depending on the diameter, thickness and material of the rubber hose and on the tightening force of the sleeve.

The annular groove may be arbitrarily located on the outer periphery of the nipple, such as at a position nearer to the tip end of the nipple than where the sleeve is caulked, or at a position nearer to the tip end of the nipple than the end of the caulking portion on the side of the hose insertion. Conversely, the annular groove may be formed on the nipple at a position nearer to the dead-end of the sleeve than the end of the caulking portion on the side of the hose insertion.

The number of annular groove is not limited to one, and may be plural. When plural grooves are formed, they may be arranged adjacent to each other or may be distanced at a given interval.

The configuration of the groove is not specifically limited. A groove may be a rectangle in section with a flat horizontal bottom. It may be a letter U shape with a curved bottom. The upper edge of the groove is preferably be curved so as not to damage the inner wall of the rubber hose.

The effects of the present invention will now be described. Firstly, bulging of the rubber is prevented. When the sleeve is caulked, the inner rubber wall of the hose inserted between the nipple and the sleeve tends to shift toward the tip end of the nipple for the amount being compressed. However, the annular groove formed on the outer periphery of the nipple receives the rubber that has shifted. Thus, the present invention prevents shifting of the rubber on the inner wall of the hose toward the tip end of the nipple and prevents it from bulging.

Secondly, the present invention prevents stress relaxation. The annular groove is so configured that there will be formed an allowance gap at its bottom when it receives a portion of the inner rubber wall of the hose, instead of being fully filled with the rubber. Thus, the present invention acts to absorb thermal expansion of the inner rubber wall of the hose to thereby prevent stress relaxation.

The present invention improves the sealing at the contact face between the nipple and the inner rubber wall. As a portion of the rubber hose enters the annular groove, the upper edge of the groove will press against the rubber to improve the sealing.

The objects and merits of the present invention as mentioned above will be fully understood from the following description taken in conjunction with the attached drawings.

### BRIEF DESCRIPTION OF THE DRAWINGS

FIG. 1 is a partial sectional side view to show the first embodiment of the metallic hose joint according to the present invention. FIG. 2 is an enlarged sectional view to explain the structure of the annular groove formed on the outer periphery of the nipple. FIG. 3 is a partial sectional side view to show the second embodiment of the metallic hose joint according to the present invention. FIG. 4 is a partial sectional side view of the third embodiment of the metallic hose joint according to the present invention. FIG. 5 is a partial sectional side view to show the fourth embodiment of the metallic hose joint according to the present invention. FIG. 6 is a partial sectional side view to show the fifth embodiment of the metallic hose joint according to the present invention. FIG. 7 is an enlarged sectional view to explain the structure of the annular groove of the fifth embodiment. FIG. 8 is a partial sectional side view to show the sixth embodiment of the joint according to the present invention.

### PREFERRED EMBODIMENTS OF THE INVENTION

The present invention will now be described in more detail by way of embodiments.

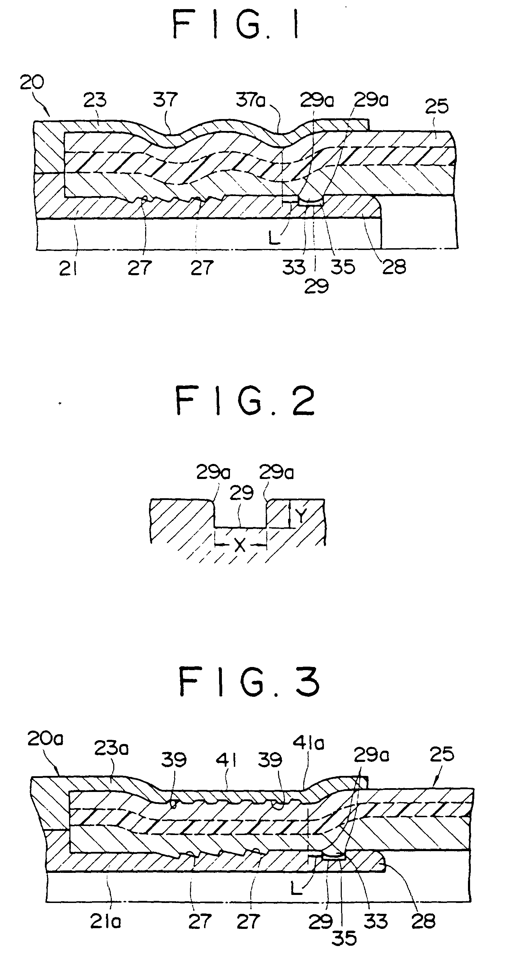

In the Embodiments shown in FIGs. 1 through 4, the annular groove is formed at a position nearer to the tip end of the nipple than the end of the caulking portion of the sleeve on the side of the hose insertion.

The metallic hose joint 20 shown in Fig. 1 is substantially the same in structure as the prior art hose joint shown in Fig. 9. It comprises a nipple 21 and a sleeve 23, to which a rubber hose 25 is fixed. Serrations 27 are formed on the outer periphery of the nipple 21 to improve the sealing performance and to avoid slipping off of the hose. An annular groove 29 is formed near the tip end 28 of the nipple from where the hose is inserted.

The width and the depth of the annular groove 29 are such that the groove will not be filled with the portion of the rubber wall that enters there when the sleeve is caulked. Thus, there will be a gap 35 between the bulge 33 entering the groove 29 and the bottom thereof. Preferably, the gap 35 is such that even if the bulge 33 becomes thermally expanded during use, the bulge 33 will not come in contact with the bottom of the groove 29. The upper edge 29a of the groove 29 is preferably rounded to prevent it from damaging the inner wall of the rubber hose.

Although the annular groove 29 is shown to have a flat bottom in the above-mentioned embodiment, the shape of the groove is in no way limited to the above. The groove 29 may be shaped like a letter U with a curved bottom. The annular groove preferably measures 1 mm - 5 mm in width X, 1 mm - 3 mm in depth Y, and 0.1 R - 1 R in curvature at the upper edge 29a (see FIG. 2).

The annular groove 29 is formed at a position nearer to the tip end 28 of the nipple 21 than a position corresponding to the caulking member 37a of the sleeve 23. Given the distance from where the caulking member 37a is located to the groove 29 as L, it is preferable that L = 0 mm - 10 mm. By forming the groove 29 at a position nearer to the tip end 28 of the nipple 21 than where the caulking member 37a is located, or in the direction the inner rubber wall 31 is shifted, the deformation of rubber can be absorbed by the groove, preventing formation of bulging.

FIG. 3 corresponds to the prior art caulking structure shown in FIG. 10. The metallic joint 20a comprises a nipple 21a provided with serrations 27 on its outer periphery and a sleeve 23a provided circumferentially with an annular groove 39 on its inner surface. The joint 21a is tightly fixed to a hose 25 by means of a caulking member 41 having a so-called flat caulking structure with a narrower portion. The annular groove 29 of this embodiment is also formed at a position nearer to the tip end 28 of the nipple than the end 41a of the caulking member 41 on the side of the sleeve tip. The shape, size and position of the annular groove 29 are identical with those of the first embodiment. Description of its detail is therefore omitted here.

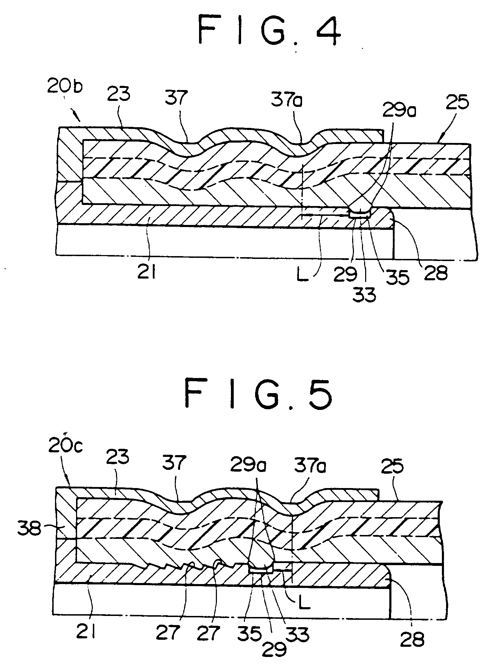

The third embodiment shown in FIG. 4 differs from the first embodiment in that the serrations 27 of the nipple 21 are omitted. The same reference numbers are used for the metallic joint 20b shown in the figure, and the description is omitted.

Similarly, the same component parts are denoted by the same reference numbers in the embodiments shown in FIG. 5 and thereafter, and description is omitted.

FIGs. 5 shows embodiments wherein the annular groove is formed at a position nearer to the dead-end of the sleeve than the end of the caulking member on the side of the hose insertion. In the case so-called two-stage caulking structure is employed, the annular groove will be formed at a position nearer to the dead-end of the sleeve than the end of the caulking member on the side of the open end of the sleeve.

The metallic hose joint 20c according to the fourth embodiment as shown in FIG. 5 has the same structure as the joint 20 shown in FIG. 1 except for the position of the annular groove 29. The annular groove 29 is nearer to the dead-end of the sleeve 23 than the caulking member 37a located on the side of the open end of the sleeve.

In case of the two-stage caulking structure such as shown in FIGs. 1, 4 and 5, stress concentrates on the portion directly below the caulking member, and the inner rubber wall is likely to be damaged by the upper edge 29a of the groove 29. The position of the groove is therefore any place other than directly below the caulking member.

Description will now be given to the sixth and fifth embodiments wherein the annular groove on the outer periphery of the nipple is divided into two with an annular partition wall erected at the center.

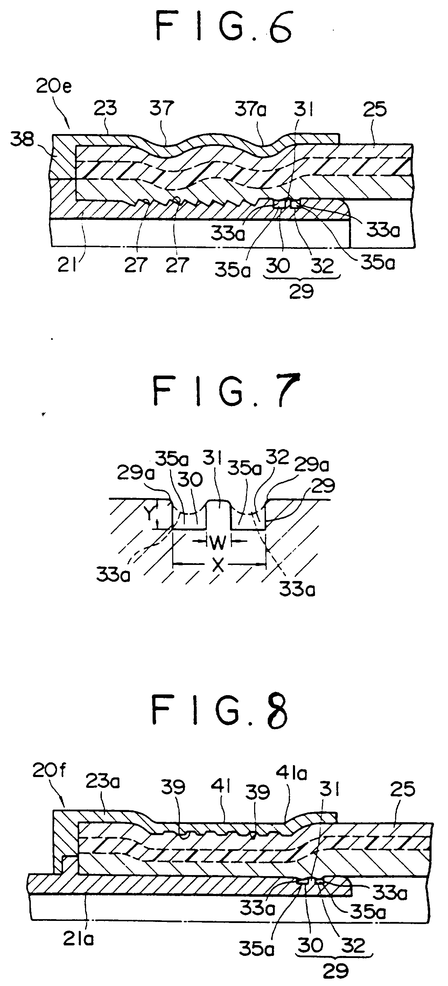

The metallic joint 20e shown in FIG. 6 employs the two-stage caulking method mentioned with respect to embodiments shown in FIGs. 1, 4 and 5, and has serrations 27 on the outer periphery of the nipple 21.

The annular groove 29 is divided into two grooves 30 and 32 by an annular partition 31 provided substantially at the center of the groove 29. The width and the depth of the grooves 30 and 32 are such that although the bulging rubber wall enters there when caulked with the sleeve, the bulge will not entirely fill the grooves. Thus, there will be formed a gap 35a each between the bottom of the grooves 30 and 32 and the bulge 33a entering there. The gap 35a is preferably such that even if the bulges 33 may become thermally expanded during use, they will not come in contact with the bottom of the grooves 30 and 32 respectively.

Referring now to FIG. 7, the configuration of the annular groove 29 will be described. The annular groove 29 measures 1.5 mm - 10 mm in width X and 1 mm - 3 mm in depth Y, and the partition 31 measures 0.5 mm - 3 mm in width. The upper edges of the annular groove 29 and the partition 31 are preferably rounded at a curvature of 0.1 R - 1 R to prevent the inner rubber wall from being damaged.

The metallic joint 20f shown in FIG.8 is the sixth embodiment and has the flat caulking structure such as shown in FIG. 3. The structure of the annular groove 29 in this embodiment is identical with that of the fifth embodiment shown in FIG. 7. That is, the annular groove 29 is sectioned into grooves 30 and 32 by an annular partition 31. The grooves 30 and 32 are formed in such a manner that there will be a gap 35a between the bottom thereof and the bulge 33a formed by the inner rubber wall will enter there when the sleeve is caulked. Even if the bulge becomes thermally expanded during use, the bulge will not come in contact with the bottom.

In the sixth and fifth embodiments, the annular groove 29 is located nearer to the tip end of the nipple than the end 37a, 41a of the caulking member 37, 41 on the side of the sleeve tip. However, the position of the groove is not thereby limited, and it may be located nearer to the dead-end of the sleeve than said end 37a, 41a of the caulking member 37, 41. When the annular groove is located nearer to the tip end of the nipple than the caulking member, the sealing performance will improve and bulging of the inner rubber wall is prevented more effectively.

Impulse test and long-term pressure test were conducted to compare the present invention with the prior art.

The rest of impulse test will be discussed first. The test was conducted according to JASO M326 (repeated pressure test for power steering hose and assembly for automobiles). The hose used in the test is a power steering hose which comprises the inner wall made of NBR, a reinforcement layer made of nylon braid, and the outer rubber wall of CR, and measures 9.7 mm in inner diameter and 19.5 mm in outer diameter. The prior art metallic joint shown in FIG. 10 was attached to the hose and caulked for comparison. The hose joints according to the second and sixth embodiments as shown in FIGs. 3 and 8 were attached to the hose and caulked for the test.

Power steering fluid (PSF) was used as the fluid oil in the test, which was conducted at the oil temperature of 120°C and ambient temperature of 120°C, the pressure waveform of a trapezoidal wave of 70 CPM, and at the maximum pressure of 120 kg/cm².

The test result is given below.

| | No. of cycles | Cause of break |
|---|---|---|
| Comparative Embodiment | 1.5 - 1.8 mill. | Crack on the bulge of the inner rubber wall |
| Second Embodiment | 2.2 - 2.5 mill. | Crack of the inner rubber wall at the mid portion of the hose |
| Sixth Embodiment | 2.5 - 2.8 mill. | Crack of the inner rubber wall at the mid portion of the hose |

The result of long-term pressure test will be discussed below. The test was conducted according to JASO M 326. The hose used in the test is a power steering hose which comprises the inner wall made of CSM, a reinforcement layer made of nylon braid, and the outer rubber wall of CSM, and measures 8 mm in inner diameter and 18 mm in outer diameter. The prior art metallic joint shown in FIG. 10 was attached to the hose as Comparative Embodiment 1, and the prior art joint shown in FIG. 9 as Comparative Embodiment 2. The hose joints according to Embodiments 1 through 4 and Embodiments shown in FIGs. 1, 3, 4, 5, 6 and 7 respectively were attached to the hose and caulked for the test.

Automatic transmission fluid (ATF) was used as the fluid oil in the test. The hose was maintained at 150°C for 70 hours to deteriorate to a certain extent, and applied with a static pressure of 150 kgf/cm². Leakage of ATF was observed.

The test result is shown below.

| | |
|---|---|
| Comparative Embodiment 1 | Leakage occurred after 1 hour |
| Comparative Embodiment 2 | Leakage occurred after 1 hour |
| Embodiment 1 | No leakage after 48 hours |
| Embodiment 2 | No leakage after 48 hours |
| Embodiment 3 | Leakage occurred after 5 hours |
| Embodiment 4 | No leakage after 48 hours |
| Embodiment 5 | Leakage occurred after 10 hours |
| Embodiment 6 | No leakage after 50 hours |

As is evident from these test results, the metallic hose joint according to the present invention is more capable of withstanding a long-term use than the prior art joints.

### FIELD OF INDUSTRIAL APPLICATION

As has been described in the foregoing, the metallic hose joint according to the present invention is applicable to hoses made of rubber or resin such as power steering hose, oil brake hose, hydraulic suspension hose, oil hose, fuel hose, hydraulic high pressure hose, and super-high pressure water jet hose where high and continuous sealing performance is required for an extended period of time.

## Claims

1. A rubber or resin hose provided with a metallic joint comprising a nipple (21) inserted in a hose end (25), and a sleeve (23) coaxial with the nipple and fitted over the latter with the hose end between them, the sleeve being caulked onto the hose end and nipple to secure and seal the joint on the hose end and having at least one inwardly projecting caulking member (37, 41), and in which the sleeve and nipple are shaped to enclose the hose end fully between them, the external surface of the nipple (21) has an annular circumferential groove (29) for receiving the internal wall of the hose when the sleeve is caulked, which groove is of such a size that a gap (35) will remain between the bottom of the groove and the hose wall (33) bulging into it, and the groove (29) is within the sleeve, characterised in that the groove is axially displaced from a position directly below the or a caulking member, and has a closed bottom.

2. The hose as claimed in claim 1 wherein said annular groove measures 1 mm - 5 mm in width and 1 mm - 3 mm in depth.

3. The hose as claimed in claim 1 wherein said annular groove is sectioned into two parts by an annular partition.

4. The hose as claimed in claim 3 wherein said annular groove measures 1.5 mm - 10 mm in overall width and 1 mm - 3 mm in depth, and 0.5 mm - 3 mm in width of the partition.

5. The hose as claimed in any of claims 1 to 4 wherein said annular groove is formed at a position nearer to the tip end (28) of the nipple than that end of the caulking member (37, 41) that is nearer the tip end of the sleeve.

6. The hose as claimed in any one of claims 1 to 4 wherein said annular groove is formed at a position nearer to the outer end (38) of the sleeve than the end of the caulking member of the sleeve nearer the tip end (28) of the sleeve.

7. A hose as claimed in any of claims 1 to 4 in which the sleeve has two axially spaced caulking members (37, 37a) and the groove (29) is placed axially between these.

8. The hose as claimed in any of claims 1 to 7 wherein the upper edge (29a) of the annular groove is rounded.

9. The hose as claimed in any of claims 1 to 8 wherein said annular groove is formed as a rectangle in cross section with a flat bottom.

10. The hose as claimed in any of claims 1 to 8 wherein said annular groove is formed in a letter U shape with a curved bottom.

11. The hose as claimed in any of claims 1 to 10 having a plurality of the said annular grooves.

12. The hose as claimed in claim 11 wherein the plurality of annular grooves is a combination of the annular grooves according to claim 2 and claim 4.

## Patentansprüche

1. Ein Schlauch aus Gummi oder Kunstharz, der mit einer metallischen Schlauchverbindung versehen ist, die ein Anschlußstück (21), das in ein Schlauchende (25) eingeführt wird, und eine Muffe (23) aufweist, die koaxial mit dem Anschlußstück ausgerichtet ist und über dem letzteren mit dem Schlauchende zwischen diesen angeordnet wird, wobei die Muffe auf dem Schlauchende und dem Anschlußstück verstemmt wird, um die Schlauchverbindung am Schlauchende zu befestigen und abzudichten, und wenigstens ein nach innen vorstehendes Verstemmelement (37, 41) hat, und bei dem die Muffe und das Anschlußstück so geformt sind, daß sie das Schlauchende vollständig zwischen sich einschließen, die Außenfläche des Anschlußstücks (21) eine ringförmige Rille (29) hat, um die Innenwandung des Schlauchs aufzunehmen, wenn die Muffe verstemmt ist, wobei diese Rille eine derartige Größe hat, daß zwischen dem Boden der Rille und der Wandung (33) des Schlauchs, die sich in diese hinein ausbaucht, ein Spalt (35) bleibt, und wobei sich diese Rille (29) innerhalb der Muffe befindet, dadurch gekennzeichnet, daß die Rille axial gegenüber einer Position direkt unter dem oder einem Verstemmelement verschoben ist und einen geschlossenen Boden hat.

2. Der Schlauch nach Anspruch 1, bei dem die ringförmige Rille 1 mm bis 5 mm in der Breite und 1 mm bis 3 mm in der Tiefe mißt.

3. Der Schlauch nach Anspruch 1, bei dem die ringförmige Rille durch eine ringförmige Trennwand in zwei Teile unterteilt ist.

4. Der Schlauch nach Anspruch 3, bei dem die ringförmige Rille 1,5 mm bis 10 mm in der Gesamtbreite und 1 mm bis 3 mm in der Tiefe und 0,5 mm bis 3 mm in der Breite der Trennwand mißt.

5. Der Schlauch nach einem der Ansprüche 1 bis 4, bei dem die ringförmige Rille in einer Position gebildet wird, die näher zum offenen Ende (28) des Anschlußstücks als das Ende des Verstemmelements (37, 41) liegt, das sich näher am offenen Ende der Muffe befindet.

6. Der Schlauch nach einem der Ansprüche 1 bis 4, bei dem die ringförmige Rille in einer Position gebildet wird, die näher zum äußeren Ende (38) der Muffe als das Ende des Verstemmelements der Muffe liegt, das sich näher am offenen Ende (28) der Muffe befindet.

7. Ein Schlauch nach einem der Ansprüche 1 bis 4, bei dem die Muffe zwei axial im Abstand zueinander angeordnete Verstemmelemente (37, 37a) hat und sich die Rille (29) axial zwischen diesen befindet.

8. Der Schlauch nach einem der Ansprüche 1 bis 7, bei dem die Oberkante (29a) der ringförmigen Rille abgerundet ist.

9. Der Schlauch nach einem der Ansprüche 1 bis 8, bei dem die ringförmige Rille im Querschnitt als ein Rechteck mit einem flachen Boden gebildet wird.

10. Der Schlauch nach einem der Ansprüche 1 bis 8, bei dem die ringförmige Rille in Form des Buchstabens U mit einem gekrümmten Boden gebildet wird.

11. Der Schlauch nach einem der Ansprüche 1 bis 10, der eine Vielzahl der ringförmigen Rillen hat.

12. Der Schlauch nach Anspruch 11, bei dem die Vielzahl der ringförmigen Rillen eine Kombination der ringförmigen Rillen nach Anspruch 2 und Anspruch 4 ist.

## Revendications

1. Tuyau en caoutchouc ou en résine pourvu d'un joint métallique comprenant un embout (21) inséré dans une extrémité (25) du tuyau et un manchon (23) coaxial à l'embout et adapté sur ce dernier avec l'extrémité du tuyau située entre eux, le manchon étant maté sur l'extrémité du tuyau et l'embout afin de fixer de manière étanche le joint sur l'extrémité du tuyau et ayant au moins un élément de matage (37, 41) avançant vers l'intérieur, et dans lequel le manchon et l'embout sont façonnés de manière à enfermer totalement l'extrémité du tuyau entre eux, la surface externe de l'embout (21) est pourvue d'une rainure circonférentielle annulaire (29) destinée à recevoir la paroi intérieure du tuyau lorsque le manchon est maté, laquelle rainure a une dimension telle qu'un vide (35) va subsister entre le fond de la rainure et la paroi (33) du tuyau qui s'y évase, et la rainure (29) est située à l'intérieur du manchon, caractérisé en ce que la rainure est déplacée axialement par rapport à un endroit situé directement sous le ou un élément de matage et a un fond fermé.

2. Tuyau selon la revendication 1, dans lequel ladite rainure annulaire mesure de 1 mm à 5 mm en largeur et de 1 mm à 3 mm en profondeur.

3. Tuyau selon la revendication 1, dans lequel ladite rainure annulaire est divisée en deux parties par une paroi de séparation annulaire.

4. Tuyau selon la revendication 3, dans lequel ladite rainure annulaire mesure de 1,5 mm à 10 mm sur l'ensemble de sa largeur et de 1 mm à 3 mm en profondeur, et de 0,5 mm à 3 mm sur la largeur de la paroi de séparation.

5. Tuyau selon l'une quelconque des revendications 1 à 4, dans lequel ladite rainure annulaire est réalisée à un endroit plus proche de l'extrémité terminale (28) de l'embout que l'extrémité de l'élément de matage (37, 41) la plus proche de l'extrémité terminale du manchon.

6. Tuyau selon l'une quelconque des revendications 1 à 4, dans lequel ladite rainure annulaire est réalisée à un endroit plus proche de l'extrémité externe (38) du manchon que l'extrémité de l'élément de matage du manchon la plus proche de l'extrémité terminale (28) du manchon.

7. Tuyau selon l'une quelconque des revendications 1 à 4, dans lequel le manchon est pourvu de deux éléments de matage (37, 37a) situés à une distance axiale et la rainure (29) est située axialement entre ces deux éléments.

8. Tuyau selon l'une quelconque des revendications 1 à 7, dans lequel le bord supérieur (29a) de la rainure annulaire est arrondi.

9. Tuyau selon l'une quelconque des revendications 1 à 8, dans lequel ladite rainure annulaire a une section transversale rectangulaire à fond plat.

10. Tuyau selon l'une quelconque des revendications 1 à 8, dans lequel ladite rainure annulaire est réalisée sous la forme d'une lettre U à fond incurvé.

11. Tuyau selon l'une quelconque des revendications 1 à 10, comprenant une pluralité desdites rainures annulaires.

12. Tuyau selon la revendication 11, dans lequel la pluralité des rainures annulaires est une combinaison des rainures annulaires selon la revendication 2 et la revendication 4.
